# EUROPEAN PATENT SPECIFICATION

(11) **EP 1 048 185 B1**
(45) Date of publication and mention of the grant of the patent: **22.11.2006**
(21) Application number: 99942837.8
(22) Date of filing: 10.08.1999
(51) Int. Cl.: H04Q 7/38

(54) **BANDWIDTH PROVISION IN A COMMUNICATION SYSTEM**
BANDBREITENZUORDNUNG IN EINEM KOMMUNIKATIONSSYSTEM
ATTRIBUTION DE LARGEURS DE BANDE DANS UN SYSTEME DE TELECOMMUNICATIONS

(30) Priority: 27.08.1998 GB 9818579
(43) Date of publication of application: 02.11.2000
(73) Proprietor: Motorola Limited, Basingstoke, Hampshire RG22 4PD (GB)
(72) Inventor: WATSON, Andrew, Portsmouth Hampshire PO6 4UF (GB); DELLAVERSON, Lou, Barrington, IL 60010 (US); WRAY, Antony, Basingstoke Hampshire RG24 8RR (GB)
(74) Representative: Jepsen, René Pihl
(86) International application number: PCT/EP1999/005824
(87) International publication number: WO 2000/013447

(56) References cited:
- EP-A- 0 448 073
- WO-A-95/30317
- WO-A-97/33393
- WO-A-97/35410
- US-A- 4 330 857
- US-A- 5 583 869
- US-A- 5 638 412
- IERA ET AL.: " "Call-Level" and "Burst-Level" Priorities for an Effective Management of Multimedia Services in UMTS" PROCEEDINGS OF INFOCOM,IEEE COMP.SOC.PRESS, vol. conf.15, 24 March 1996 (1996-03-24), pages 1363-1370, XP000622274 Los Alamitos,U.S.A

## Description

### Field of the Invention

The present invention relates to a method of operating within a communication system wherein a bandwidth provider responsible for a given bandwidth of said communication system provides different amounts of said given bandwidth to respective partial users of said given bandwidth. The present invention also relates to an apparatus for such a communication system. The invention is applicable to but not limited to a cellular radio communication system such as the Universal Mobile Telecommunication System (UMTS) currently under standardisation.

### Background of the Invention

Communication systems comprise a finite amount of bandwidth resource based upon the technical means forming the communications links and interfaces between different parts of the communication system. Also, a bandwidth resource can be limited for commercial rather than technical reasons. In the present application bandwidth is to be understood in the sense of bandwidth capacity with respect to communications signalling and traffic. Accordingly, bandwidth can include or be expressed as number of channels.

In communications systems, there is a hierarchy with respect to provision of the bandwidth resource. The simplest example would be a system, for example a private landline telephone system, in which a single operator controlled all the components including communication links of the communications system. In this system, the operator represents the sole bandwidth provider. He provides bandwidth to each subscriber making a telephone call, thus such subscribers represent partial users of the total bandwidth of the system. In this case the amount of bandwidth provided for each partial user is the same.

A more complicated bandwidth provision hierarchy is one in which total system bandwidth is divided commercially between a first level of partial users thereof represented by different operators who in turn supply respective parts of their bandwidth down a bandwidth hierarchy chain to a second layer of partial users thereof, and so on, until ultimately reaching the final layer of partial users represented by the end-users or subscribers. Both conventional landline telephone systems, and cellular radio communication systems currently exist which are arranged in this manner for commercial reasons. Also, such sub-division of bandwidth takes place in other communication networks connected on a nodal fashion and containing sub-links, such as the internet.

Harmonised interface standards facilitate commercial sub-division of fundamental bandwidth resource within a given communication system. An established harmonised system applicable to cellular radio communication systems is Global System for Mobile Communications (GSM). Statistical multiplexing is employed in GSM systems to enhance spectrum efficiency. Due to the statistical nature of traffic low efficiency can arise, for example a single GSM carrier of seven time division multiple access (TDMA) channels is typically only 42% efficient (2.94 Erlangs at 2% blocking).

The Universal Mobile Telecommunication System (UMTS) currently under standardisation is intended to provide a harmonised standard under which cellular radio communication systems will provide communications links suitable for transmitting a wide variety of data services. Higher bandwidth needs such as those required by multimedia applications will be encompassed. It is expected that within the framework of developments such as UMTS or the like, cellular radio communication systems will play an increasing role in information communication arrangements including those such as the internet.

An example of bandwidth provision in a communication system is provided in Patent Cooperation Treaty Patent Application WO 97/33393. This document describes a communication system which comprises a master device and a slave device. Consequential to negotiations within the system and having regard to system capacity and a relative hierarchy that exists between on-going communications, a bandwidth used for an on-going communication between the master device and the slave device is modified in proportion to a substantially instantaneous data rate requirement of the communication.

Another example of bandwidth provision in a communication system is provided in European Patent Application EP 0 448 073 which discloses an ATM communication system having a switching network with a plurality of ATM exchanges. The ATM switching network comprises a notifying unit which notifies the terminal equipment of the allocable bandwidth which can be used in accordance with the amount of traffic in the ATM switching network.

Generally speaking, the application of bandwidth provision hierarchies within communication systems such as cellular radio communications systems along the lines of UMTS creates a broad range of new engineering problems and challenges. Indeed, one of the challenges faced is to envisage what new opportunities arise to provide bandwidth providers and partial users of bandwidth with additional facilities in the light of such application.

### Summary of the Invention

In the light of the above the present inventors have envisaged that systems such as UMTS can be arranged to provide bandwidth from a bandwidth provider to partial users thereof in a variable bandwidth and bandwidth-on-demand mode. The present inventors have envisaged that in systems such as UMTS, such modes will particularly require that the amount of bandwidth provided to a partial user for a particular item of traffic can advantageously be chosen by either the provider or partial user such that spectral efficiency and network capacity are met in a balanced fashion. If the amount of bandwidth provided is insufficient the needs for that traffic will not be met. On the other hand, if surplus bandwidth is needlessly provided then this will waste bandwidth resource hence ultimately rendering the system inefficient.

The present inventors have envisaged that contrary to conventional systems in which the amount of bandwidth provided for each partial user is the same, in systems such as UMTS different partial users and also different services required by a particular partial users will economically require a different amount of bandwidth.

Furthermore, the present inventors have envisaged that different partial users, and also different services, also have different requirements with respect to quality, e.g. inverse of error rate, and delay, i.e. latency, where delay is the period of time that elapses before the or while a service is transmitted. For example, two way speech telephony has a modest requirement for quality but a strong requirement for good performance with respect to delay, good performance being a short delay. Text messages benefit trunking and spectrum efficiency by being sent at high bandwidth, although a long delay is acceptable.

The present invention advantageously implements means for the bandwidth provider and partial user to take advantage of the characteristics described above and envisaged by the present inventors. More particularly, the present invention will allow for greater utilisation of available capacity, by for example allowing high latency data to be sent in gaps in speech traffic, in an improved fashion based upon new technical possibilities derived by the present inventors with respect to systems such as UMTS.

According to one aspect of the present invention, there is provided a method of operating within a communication system wherein a bandwidth provider responsible for a given bandwidth of said communication system provides different amounts of said given bandwidth to respective partial users of said given bandwidth, as claimed in claim 1.

According to another aspect of the invention, there is provided an apparatus for a communication system wherein a bandwidth provider responsible for a given bandwidth of said communication system provides different amounts of said given bandwidth to respective partial users of said given bandwidth, as claimed in claim 6.

Further aspects of the invention are as claimed in the dependent claims.

The present invention provides the partial user with capacity information, which enables the partial user to advantageously make an informed and efficient use of bandwidth facility. Additional specific advantages are apparent from the following description and figures.

### Brief Description of the Drawings

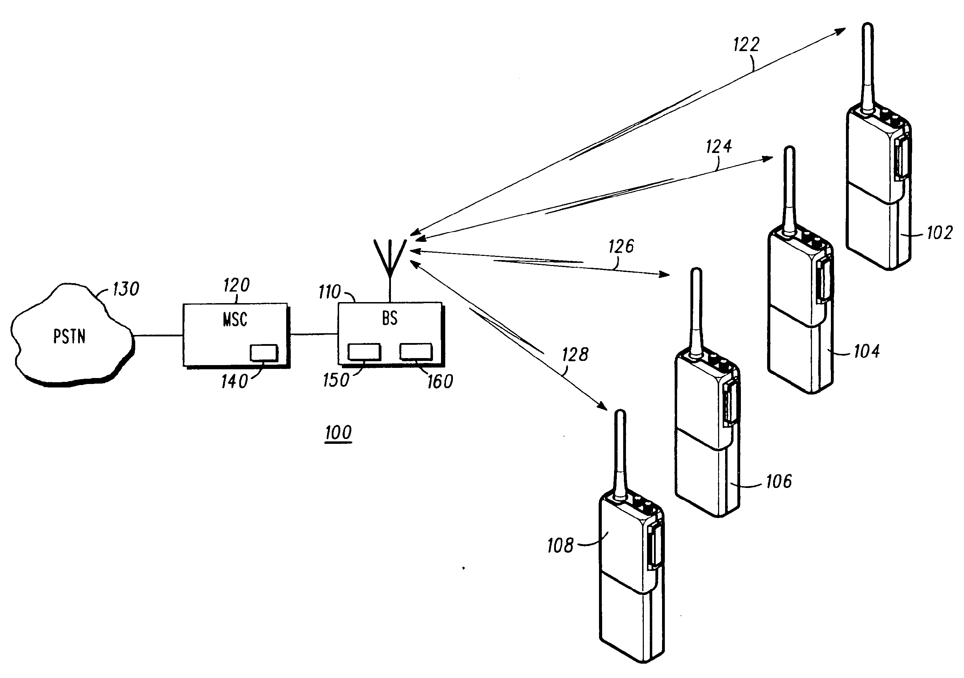

FIG. 1 is an illustration of a communication system in accordance with the present invention.

### Description of a Preferred Embodiment of the Invention

One particular embodiment of the invention is now described by way of example only. FIG. 1 shows a radio communication system 100 including user stations 102, 104 and 106, and radio base station (BS) 110. In this example each user station 102, 104 and 106 is a mobile station, more particularly a mobile telephone with display screen. Communication links consisting of radio links 122, 124 and 126 are established between BS 110 and user stations 102, 104 and 106 respectively. The geographical area served by BS 110 constitutes one cell of a cellular radio communication system.

In the present example the operator of communication system 100 has the role of bandwidth provider and is responsible for a given bandwidth of said communication system, which in this example consists of the whole bandwidth provided by BS 110 via its radio links. The respective users of user stations 102, 104 and 106 constitute respective partial users of the given bandwidth from BS 110 for which the system operator is responsible. In the present invention the operator of communication system 100 provides different amounts of said given bandwidth to respective partial users of said given bandwidth, that is different amounts of bandwidth will be employed in the different respective communications from user stations 102, 104 and 106.

In the present example, BS 110 is connected to a mobile services switching centre (MSC) 120, which in turn is connected to a public switched telephone network (PSTN) 130. PSTN can be connected to any other information or communication network, for example the internet. Users or service providers can be connected to the communication system through PSTN 130 or alternatively through an interface coupled directly to MSC 120 or BS 110.

Furthermore it is to be appreciated that the present invention is applicable to other varieties of communication system or network configurations and network components, arranged in different hierarchical, access and interconnection formats, in data handling communications systems such as UMTS. Similarly, it is to be appreciated that according to the specific network configuration and hierarchies, alternative system components will be incorporated serving different roles compared to BS 110, MSC 120 and PSTN 130. For example, networks such as UMTS ones may incorporate a public data network as opposed to a PSTN, and may incorporate a mobile packet switch as opposed to an MSC. Indeed the invention is applicable to any communication network, including overall networks consisting of sub-networks arranged in parallel and/or superimposed hierarchical logical format, in which a bandwidth provider is providing bandwidth down a supply chain to partial users thereof who will require different respective amounts of bandwidth.

The method of the present embodiment includes the step of determining a bandwidth availability profile with respect to said given bandwidth. The available bandwidth at a particular time is the difference between the total given bandwidth that can be borne, in this case by BS 110, and the bandwidth already in use at that time. An alternative terminology for available bandwidth is instantaneous bandwidth. In a simplistic version of the present example, consider that only user stations 102 at that particular time is engaged in traffic communication, thus the bandwidth in use at that particular time is that used in by user station 102. Hence the available bandwidth at that particular time is determined accordingly as the difference between the above two described amounts. This value embodies the simplest form of bandwidth availability profile with respect to the given bandwidth. However, a more preferred form of the bandwidth availability profile is one which also includes data related to the amount of bandwidth that has already been committed to certain partial users. In this example consider that user station 104 has requested a communication channel and that the system operator has committed certain bandwidth to establishing that channel. Then in this case the bandwidth availability profile is determined in the form of a time dependent function including both the exiting usage of user station 102 and the impending usage of user station 104. It will be appreciated that in applying the present invention the skilled person will select the form of the bandwidth availability profile according to the commercial and technical requirements of the particular system under consideration.

In the present embodiment the means, for determining a bandwidth availability profile with respect to said given bandwidth as described above, is shown as item 140 in FIG. 1, and consists of a discrete processing unit containing electronic circuitry, being located in MSC 120. However, it is to be appreciated that in other embodiments of the present invention such means can be incorporated in the form of software, alternative hardware, manual input means, or a combination of any of the above. Also, the unit embodying such means can be located in other parts of the communication system such as at BS 110, or can even be formed of different component parts distributed in a plurality of locations within the system.

The method of the present embodiment includes the step of determining a traffic profile with respect to traffic waiting to use said given bandwidth. In the present example the traffic waiting to use the given bandwidth is the traffic user station 106 wishes to communicate. For clarity, the distinction is drawn between the traffic waiting to use the given bandwidth which is exemplified by that of user station 106, which is characterised in that the system operator has not committed to allocate bandwidth to this traffic, and the traffic of user station 104 which as described above, although not yet sent, is nevertheless included in the determination of the bandwidth availability profile as it is characterised by being traffic that the system has committed to be borne.

In the present embodiment the traffic profile is a function of a level of said traffic waiting to use said given bandwidth. In the present simple case the traffic profile is thus represented by data corresponding to the traffic level to be communicated by user station 106. It is to be appreciated that in other more complicated embodiments the data will correspond to many user stations, and will be processed using appropriate processing techniques.

In the present embodiment the means, for determining a traffic profile with respect to said given bandwidth as described above, are shown as item 150 in FIG. 1, and consist of a discrete processing unit containing electronic circuitry, being located in BS 110. However, it is to be appreciated that in other embodiments of the present invention such means can be incorporated in the form of software, alternative hardware, manual input means, or a combination of any of the above. Also, the unit embodying such means can be located in other parts of the communication system such as at MSC 120, or can even be formed of different component parts distributed in a plurality of locations within the system.

In an alternative embodiment, the traffic profile is a function of a priority of said traffic waiting to use said given bandwidth. Priority refers to the delay criticality of traffic waiting to use the system, for example it can be the inverse of allowable latency. Relating to the present example, the traffic profile is determined according to a profile that lends a higher priority weighting to the traffic of user station 106 if that traffic is to consist of speech, and a lower weighting if the traffic of user station 106 is to consist of text data.

In a further alternative embodiment, the traffic profile is a function of a level of said traffic waiting to use said given bandwidth and is a function of a priority of said traffic waiting to use said given bandwidth. Thus the options described above are combined in one. The specific programmes or algorithms providing such a combined determination will again be chosen by the skilled person according to the requirements of the particular system under consideration.

In those embodiments described above wherein the traffic profile is a function, either solely or partly, of a priority of the waiting traffic, a further option is that the function of a priority of said traffic waiting to use said given bandwidth is calculated in a non-linear fashion with respect to time for respective components of said traffic waiting to use said given bandwidth. One example is that a long text message may originally be of low criticality with respect to delay in that it can be sent any time within" say, a four hour period, but on the other hand once transmission has been started it is of high criticality that the transmission is completed within a further time period of, say, five minutes. Alternatively, irrespective of the finite delays permitted, non-linear priority with respect to time can be programmed into the function of priority such as to ensure that high priority is allocated to messages when most of their content is sent, so as to avoid wasteful repetition of the whole message in the event that just the last small part thereof was not sent due to being low priority.

The method of each of the above embodiments also includes the step of transmitting capacity information to a said partial user, wherein said capacity information comprises said bandwidth availability profile and said traffic profile. One possibility is for both the bandwidth availability profile and the traffic profile to be combined before transmission to a partial user. In the present example the capacity information is transmitted to the partial associated with user station 108. The means, for transmitting capacity information to a said partial user, wherein said capacity information comprises said bandwidth availability profile and said traffic profile as described above, are shown as item 160 in FIG. 1, and consist of a discrete processing unit containing electronic circuitry and associated radio transmission equipment, being located in BS 110. However, it is to be appreciated that in other embodiments of the present invention such means can include software, alternative hardware, manual input means, or a combination of any of the above. Also, the unit embodying such means can include component parts distributed in a plurality of locations within the system.

In general, one opportunity provided to a partial user of a bandwidth resource by the capacity information provided to him under the present invention is that of deciding whether under the particular circumstances represented by the present capacity information he wishes to go ahead with his own communication, or perhaps wait until it can take place at lower cost due to higher available capacity at a later time.

Under the present invention, partial users with simple applications will use the above described capacity information at a link layer of overall parallel network arrangements to operate simple packet schedulers, partial users whose traffic will consists of more sophisticated multimedia applications will use the above described capacity information in conjunction with algorithms to achieve their communications requirements at improved efficiency and reduced cost. To facilitate this, means can be provided to convey the profiles of the application layers both at the point of source of content providers and at end-user stations. The means can consist of Application Programming Interfaces (API) which would allow applications authors to write appropriate software for increased exploitation of the capacity information. Such algorithms determine how long to queue or delay message elements before it becomes essential to send them, so allowing higher priority messages to use the bandwidth resource and also to achieve maximum utilisation of the available bandwidth.

In addition to the above described profiles, the bandwidth provider can also transmit cost profiles to the partial users. These will provide information on how transmission cost varies.

## Claims

1. A method of operating within a communication system (100) wherein a bandwidth provider responsible for a given bandwidth of said communication system (100) provides different amounts of said given bandwidth to respective partial users of said given bandwidth;
the method comprising the steps of:
determining a bandwidth availability profile with respect to said given bandwidth; determining a traffic profile with respect to traffic waiting to use said given bandwidth; and
**characterized by** comprising the step of
transmitting capacity information to a said partial user, wherein said capacity information comprises said bandwidth availability profile and said traffic profile.

2. A method according to claim 1, wherein said traffic profile is a function of a level of said traffic waiting to use said given bandwidth.

3. A method according to claim 1, wherein said traffic profile is a function of a priority of said traffic waiting to use said given bandwidth.

4. A method according to claim 1, wherein said traffic profile is a function of a level of said traffic waiting to use said given bandwidth and is a function of a priority of said traffic waiting to use said given bandwidth.

5. A method according to any of claims 3 and 4, wherein said function of a priority of said traffic waiting to use said given bandwidth is calculated in a non-linear fashion with respect to time for respective components of said traffic waiting to use said given bandwidth.

6. A method according to any claim 1 wherein said communication system is a radio communication system.

7. An apparatus for a communication system (100) wherein a bandwidth provider responsible for a given bandwidth of said communication system (100) provides different amounts of said given bandwidth to respective partial users of said given bandwidth;
the apparatus comprising:
means for determining a bandwidth availability profile with respect to said given bandwidth;
means for determining a traffic profile with respect to traffic waiting to use said given bandwidth; and
the apparatus being **characterized by** comprising:
means for transmitting capacity information to a said partial user, wherein said capacity information comprises said bandwidth availability profile and said traffic profile.

8. An apparatus according to claim 7, wherein said traffic profile is a function of a level of said traffic waiting to use said given bandwidth.

9. An apparatus according to claim 7, wherein said traffic profile is a function of a priority of said traffic waiting to use said given bandwidth.

10. An apparatus according to claim 7, wherein said traffic profile is a function of a level of said traffic waiting to use said given bandwidth and is a function of a priority of said traffic waiting to use said given bandwidth.

11. An apparatus according to any of claims 9 or 10, wherein the apparatus comprises means for calculating said function of a priority of said traffic waiting to use said given bandwidth in a non-linear fashion with respect to time for respective components of said traffic waiting to use said given bandwidth

12. An apparatus according to claim 7 wherein said communication system (100) is a radio communication system.

## Patentansprüche

1. Verfahren zum Arbeiten in einem Kommunikationssystem (100), wobei ein Bandbreitenanbieter, der für eine gegebene Bandbreite des Kommunikationssystems (100) verantwortlich ist, jeweiligen Teilanwendern der gegebenen Bandbreite verschiedene Mengen der gegebenen Bandbreite zur Verfügung stellt;
wobei das Verfahren die folgenden Schritte umfasst:
Bestimmen eines Bandbreitenverfügbarkeitsprofils bezüglich der gegebenen Bandbreite;
Bestimmen eines Verkehrsprofils bezüglich eines Verkehrs, der darauf wartet, die gegebene Bandbreite zu verwenden; und
**dadurch gekennzeichnet, dass** es die folgenden Schritte umfasst:
Übertragen von Kapazitätsinformation an den Teilanwender, wobei die Kapazitätsinformation das Bandbreitenverfügbarkeitsprofil und das Verkehrsprofil umfasst.

2. Verfahren gemäß Anspruch 1, wobei das Verkehrsprofil eine Funktion eines Pegels des Verkehrs ist, der darauf wartet, die gegebene Bandbreite zu verwenden.

3. Verfahren gemäß Anspruch 1, wobei das Verkehrsprofil eine Funktion einer Priorität des Verkehrs ist, der darauf wartet, die gegebene Bandbreite zu verwenden.

4. Verfahren gemäß Anspruch 1, wobei das Verkehrsprofil eine Funktion eines Pegels des Verkehrs, der darauf wartet, die gegebene Bandbreite zu verwenden, und eine Funktion einer Priorität des Verkehrs, der darauf wartet, die gegebene Bandbreite zu verwenden, ist.

5. Verfahren gemäß Anspruch 3 oder 4, wobei die Funktion einer Priorität des Verkehrs, der darauf wartet, die gegebene Bandbreite zu verwenden, auf eine nicht-lineare Art und Weise bezüglich einer Zeit, die entsprechende Komponenten des Verkehrs darauf warten, die gegebene Bandbreite zu verwenden, berechnet wird.

6. Verfahren gemäß Anspruch 1, wobei das Kommunikationssystem ein Funkkommunikationssystem ist.

7. Vorrichtung für ein Kommunikationssystem (100), wobei ein Bandbreitenanbieter, der für eine gegebene Bandbreite des Kommunikationssystems (100) verantwortlich ist, jeweiligen Teilanwendern der gegebenen Bandbreite verschiedene Mengen der gegebenen Bandbreite zur Verfügung stellt;
wobei die Vorrichtung umfasst:
Mittel zum Bestimmen eines Bandbreitenverfügbarkeitsprofils bezüglich der gegebenen Bandbreite;
Mittel zum Bestimmen eines Verkehrsprofils bezüglich eines Verkehrs, der darauf wartet, die gegebene Bandbreite zu verwenden; und
wobei die Vorrichtung **dadurch gekennzeichnet ist, dass** sie umfasst:
Mittel zum Übertragen von Kapazitätsinformation an den Teilanwender, wobei die Kapazitätsinformation das Bandbreitenverfügbarkeitsprofil und das Verkehrsprofil umfasst.

8. Vorrichtung gemäß Anspruch 7, wobei das Verkehrsprofil eine Funktion eines Pegels des Verkehrs ist, der darauf wartet, die gegebene Bandbreite zu verwenden.

9. Vorrichtung gemäß Anspruch 7, wobei das Verkehrsprofil eine Funktion einer Priorität des Verkehrs ist, der darauf wartet, die gegebene Bandbreite zu verwenden.

10. Vorrichtung gemäß Anspruch 7, wobei das Verkehrsprofil eine Funktion eines Pegels des Verkehrs, der darauf wartet, die gegebene Bandbreite zu verwenden, und eine Funktion einer Priorität des Verkehrs, der darauf wartet, die gegebene Bandbreite zu verwenden, ist.

11. Vorrichtung gemäß Anspruch 9 oder 10, wobei die Vorrichtung umfasst: Mittel zum Berechnen der Funktion einer Priorität des Verkehrs, der darauf wartet, die gegebene Bandbreite zu verwenden, auf eine nicht-lineare Art und Weise, bezüglich einer Zeit, die entsprechende Komponenten des Verkehrs darauf warten, die gegebene Bandbreite zu verwenden.

12. Vorrichtung gemäß Anspruch 7, wobei das Kommunikationssystem (100) ein Funkkommunikationssystem ist.

## Revendications

1. Procédé destiné à assurer le fonctionnement à l'intérieur d'un système de communications (100), où un fournisseur de largeur de bande garantissant une largeur de bande donnée pour ledit système de communications (100) fournit des quantités différentes de ladite largeur de bande donnée à des utilisateurs partiels respectifs de ladite largeur de bande donnée ;
le procédé comprenant les opérations suivantes :
déterminer un profil de disponibilité de largeur de bande par rapport à ladite largeur de bande donnée ;
déterminer un profil de trafic par rapport au trafic attendant d'utiliser ladite largeur de bande donnée ; et
le procédé étant **caractérisé en ce qu'**il comprend l'opération qui consiste à transmettre des informations de capacité à un dit utilisateur partiel, où lesdites informations de capacité comprennent ledit profil de disponibilité de largeur de bande et ledit profil de trafic.

2. Procédé selon la revendication 1, où ledit profil de trafic est une fonction du niveau dudit trafic attendant d'utiliser ladite largeur de bande donnée.

3. Procédé selon la revendication 1, où ledit profil de trafic est une fonction de la priorité dudit trafic attendant d'utiliser ladite largeur de bande donnée.

4. Procédé selon la revendication 1, où ledit profil de trafic est une fonction du niveau dudit trafic attendant d'utiliser ladite largeur de bande donnée et est une fonction de la priorité dudit trafic attendant d'utiliser ladite largeur de bande donnée.

5. Procédé selon l'une quelconque des revendications 3 et 4, où ladite fonction de la priorité dudit trafic attendant d'utiliser ladite largeur de bande donnée est calculée de manière non linéaire par rapport au temps pour des composantes respectives dudit trafic attendant d'utiliser ladite largeur de bande donnée.

6. Procédé selon l'une quelconque des revendications précédentes, où ledit système de communications est un système de radiocommunications.

7. Appareil destiné à un système de communications (100), où un fournisseur de largeur de bande garantissant une largeur de bande donnée dudit système de communications (100) fournit des quantités différentes de ladite largeur de bande donnée à des utilisateurs partiels respectifs de ladite largeur de bande donnée ;
l'appareil comprenant :
un moyen qui sert à déterminer un profil de disponibilité de largeur de bande par rapport à ladite largeur de bande donnée ;
un moyen qui sert à déterminer un profil de trafic par rapport au trafic attendant d'utiliser ladite largeur de bande donnée ; et
l'appareil étant **caractérisé en ce qu'**il comprend :
un moyen servant à transmettre des informations de capacité à un dit utilisateur partiel, où lesdites informations de capacité comprennent ledit profil de disponibilité de largeur de bande et ledit profil de trafic.

8. Appareil selon la revendication 7, où ledit profil de trafic est une fonction du niveau dudit trafic attendant d'utiliser ladite largeur de bande donnée.

9. Appareil selon la revendication 7, où ledit profil de trafic est une fonction de la priorité dudit trafic attendant d'utiliser ladite largeur de bande donnée.

10. Appareil selon la revendication 7, où ledit procédé de trafic est une fonction du niveau dudit trafic attendant d'utiliser ladite largeur de bande donnée et est une fonction de la priorité dudit trafic attendant d'utiliser ladite largeur de bande donnée.

11. Appareil selon l'une quelconque des revendications 9 et 10, où l'appareil comprend un moyen servant à calculer ladite fonction de la priorité dudit trafic attendant d'utiliser ladite largeur de bande donnée d'une manière non linéaire par rapport au temps pour des composantes respectives dudit trafic attendant d'utiliser ladite largeur de bande donnée.

12. Appareil selon la revendication 7, où ledit système de communication (100) est un système de radiocommunications.
